Europäisches Patentamt

European Patent Office

Office européen des brevets

(11) Veröffentlichungsnummer : **0 033 975**
**B1**

(12) **EUROPÄISCHE PATENTSCHRIFT**

(45) Veröffentlichungstag der Patentschrift :
13.06.84

(21) Anmeldenummer : **81100916.6**

(22) Anmeldetag : **10.02.81**

(51) Int. Cl.³ : **A 23 L   1/06**, A 23 L   1/212,
A 23 G   3/00

(54) Verfahren zur Herstellung eines Nahrungsmittels, dessen Hauptbestandteile getrocknete Obst- bzw. Zuckerbananen sind.

(30) Priorität : 12.02.80 DE 3005104

(43) Veröffentlichungstag der Anmeldung :
19.08.81 Patentblatt 81/33

(45) Bekanntmachung des Hinweises auf die Patenterteilung : 13.06.84 Patentblatt 84/24

(84) Benannte Vertragsstaaten :
BE FR GB IT NL

(56) Entgegenhaltungen :
CH-A-   544 507
DE-A- 2 720 174
FR-A-   606 200
FR-A- 2 182 234

(73) Patentinhaber : **Korn, Helmut, Ing.-grad.**
**Wolfsgrabenstrasse 32**
**D-6480 Wächtersbach 1 (DE)**

(72) Erfinder : **Korn, Helmut, Ing.-grad.**
**Wolfsgrabenstrasse 32**
**D-6480 Wächtersbach 1 (DE)**

(74) Vertreter : **Munderich, Paul, Dipl.-Ing.**
**Frankfurter Strasse 84**
**D-6466 Gründau-Rothenbergen (DE)**

## Beschreibung

Es ist seit vielen Jahren bekannt, Obst- und Zuckerbananen zu trocknen und diese, zumindest über eine gewisse Zeitspanne, als Depotnahrungsmittel einzulagern.

Desweiteren ist es bekannt, die im wesentlichen aus Vorderindien stammende Gemüse- oder Pferdebanane zu einem leicht verdaulichen Mehl zu verarbeiten, das insbesondere als Speise für Kinder und Kranke und zur Herstellung von Keksen verwendet wird, wobei dieses Bananenmehl als solches nicht als vollwertig bezeichnet werden kann, da es, in aller Regel, aus noch unreifen, entschalten, getrockneten Bananen hergestellt wird.

Berücksichtigt man den hohen Nährwert der Banane als solchen, so ist der übliche Verzicht auf die nicht vollständige Ausreifung, insbesondere im Hinblick auf die heute gegebenen Möglichkeiten zum Stop des Reifeprozesses in der Hochreife vor dem Übergang in die Überreife, z. B. durch Mittel der Kühltechnik, nicht ganz verständlich, trotzdem muß mit unterschiedlichen Qualitäten gerechnet werden. Normalerweise enthalten 100 g genießbare, d. h. reife Bananen, 76 g Wasser, während der Restanteil von 24 g, in aller Regel, sich in etwa aus 83,5 % Kohlenhydrate, 5 % Eiweiß, 3,5 % Rohfaser, 3,5 % Mineralstoffe und einem Rest aus Natrium, Kalium, Eisen, C-Vitamin, Zitronensäure und Spuren von Serotonin zusammensetzt.

Wie erwähnt, handelt es sich hier um Durchschnittswerte. Das Produkt ist äußerst zäh und in dieser Form nur schlecht genießbar.

Darüberhinaus kann es, im Hinblick auf die möglichen Streuungen im Kohlenhydratanteil nicht als ein Endprodukt mit ausgeprägten qualitativen und geschmacklichen Eigenschaften betrachtet werden.

Es ist deshalb Aufgabe der Erfindung ein Verfahren nach der eingangs genannten Art zu nennen, das, ausgehend von der Bananengrundsubstanz, die Herstellung eines in seinen Eigenschaften jeweils vorbestimmten Produktes, insbesondere in Form von Konfekt, Konfitüre oder dgl. zuläßt.

Erfindungsgemäß wird diese Aufgabe dadurch gelöst, daß

a) die ursprünglich auf einen gegen Null gehenden Wassergehalt getrockneten Bananen in Wasser als Dispersionsmittel als Phase verteilt und in ein flüssiges bis pastöses Verhalten aufweisendes Gemenge überführt werden ;

b) diesem Gemenge andersartige Früchte, in Form von Fruchtmassen, etwa gleicher Konsistenz bzw. Viskosität, anteilig, vorzugsweise in Verbindung mit Schokolade, zugeführt und mit dieser homogenisiert werden ;

c) das homogenisierte Gemenge durch weitere Vermischung mit wässriger Lösung aus Rohr- oder Rübenzucker abgeschmeckt und das abgeschmeckte Mischprodukt anschließend durch Trocknung wieder in eine pastöse Phase für die Endverarbeitung als Konfitüre, Konfekt oder dgl. überführt wird.

Dieses Verfahren ermöglicht die Aufbereitung einer Masse, die nach jeweiliger Feststellung der wesentlichen Grunddaten, insbesondere des Kohlenhydratanteiles und dessen Zuckergehaltes, die Aufbereitung eines Zwischenproduktes, das durch die vorgeschlagenen nachfolgenden Verfahrensschritte, in das gewünschte Endprodukt überführt werden kann.

Es wird vorgeschlagen, daß die mit dem Bananengemenge in Form von Fruchtmassen zusammenzuführenden und zu homogenisierenden, andersartigen Früchte Südfrüchte, und zwar Naranjilla (lulo), Solanum quitoense/Tamarindo (Baumtomaten), Cyphomandra betacea/Guayava (Psidium guayava), Papaya/Carica papya, Mangos (Mangifera indica), Purpurgranadille/Passionsfrucht (Passiflora edulis), Chirimoya-Guanabana, Avocatobirne oder aber europäische, zur Konfitürenherstellung geeignete Früchte, und zwar Birnen, Pflaumen, Erdbeeren, Pfirsiche sind, die in vorbestimmten Anteilen dem pastösen Bananengemenge zugeführt werden.

Selbstverständlich lassen sich auch andere genießbare Substanzen in dem Bananengrundgemenge unterbringen.

Es ist vorgesehen, daß die Zuführung von andersartigen Fruchtmassen zu dem pastösen Bananengemenge in Anteilen bis zu 50 % erfolgt.

Es kann weiter vorgesehen werden, daß dem Gemenge zusätzlich Kaffe in körniger bis pulvriger Form zugeführt wird.

Die nach diesem Verfahren hergestellten Produkte sind infolge ihrer Zusammensetzung, insbesondere ihres hohen Zuckergehaltes als kräftigende Mittel für Sportler, als Kraftnahrmittel für militärische Verbände, als Vorratsnahrungsmittel für Krisenzeiten und als vitaminreiche Zukost und Regelkost, insbesondere für vegetationsarme Gebiete zu verwenden.

Das Nahrungsmittel kann in Block-, Riegel-, Plattenform od. dergleichen oder aber in pastöser Form in Gebinden bevorratet werden.

Nachstehend soll eine Rezeptur genannt werden, nach der ein besonders wohlschmeckendes Produkt herstellbar ist.

Die angegebenen Mengen sind Trockenmengen.

| | |
|---|---|
| Bananentrockensubstanz | 50 % |
| Mangos | 10 % |
| Guayava | 10 % |
| Papaya | 10 % |
| Kakao | 10 % |
| Rohrzucker | 10 % |

## Ansprüche

1. Verfahren zur Herstellung eines Nahrungsmittels, dessen Hauptbestandteile getrocknete Obst- bzw. Zuckerbananen sind, dadurch gekennzeichnet, daß

a) die ursprünglich auf einen gegen Null gehenden Wassergehalt getrockneten Bananen in Wasser als Dispersionsmittel als Phase verteilt und in ein flüssiges bis pastöses Verhalten aufweisendes Gemenge überführt werden ;

b) diesem Gemenge andersartige Früchte, in Form von Fruchtmassen, etwa gleicher Konsistenz bzw. Viskosität anteilig, vorzugsweise in Verbindung mit Schokolade, zugeführt und mit dieser homogenisiert werden ;

c) das homogenisierte Gemenge durch weitere Vermischung mit wässriger Lösung aus Rohr- oder Rübenzucker abgeschmeckt und das abgeschmeckte Mischprodukt anschließend durch Trocknung wieder in eine pastöse Phase für die Endverarbeitung als Konfitüre, Konfekt oder dgl. überführt wird.

2. Verfahren zur Herstellung eines Nahrungsmittels nach Anspruch 1, dadurch gekennzeichnet, daß die mit dem Bananengemenge in Form von Fruchtmassen zusammenzuführenden und zu homogenisierenden, andersartigen Früchte Südfrüchte, und zwar Naranjilla (lulo, Solanum quitoense/Tamarindo (Baumtomaten), Cyphomandra betacea/Guayava (Psidium guayava), Papaya/Carica papya, Mangos (Mangifera indica), Purpurgranadille/Passionsfrucht (Passiflora edulis), Chirimoya-Guanabana, Avocatobirne oder aber europäische, zur Konfitürenherstellung geeignete Früchte, und zwar Birnen, Pflaumen, Erdbeeren, Pfirsiche sind, die in Anteilen bis zu 50 % Gesamtanteil dem pastösen Bananengemenge zugeführt werden.

3. Verfahren zur Herstellung eines Nahrungsmittels nach Anspruch 1 bis 3, dadurch gekennzeichnet, daß dem Gemenge zusätzlich Kaffee in körniger bis pulvriger Form zugeführt wird.

## Claims

1. A process for the production of a foodstuff the main component parts of which are dried fruit or sugared bananas, characterized in that

a) the bananas originally dried to a water content of approximately zero are distributed in water forming the dispersant as a phase and are then conveyed to a mixture of a fluid to pasty consistency ;

b) other types of fruit in the form of fruit pulps of approximately the same consistency and viscosity, respectively, are proportionately fed, preferably in conjunction with chocolate, to and homogenized with the said mixture ;

c) the homogenized mixture by further admixing thereto an aqueous solution of cane sugar or beet sugar, is flavoured, and the flavoured mix, thereafter, is transferred again by drying to a pasty phase for the final processing thereof into preserves, candy or the like.

2. A process for the production of a foodstuff according to claim 1, characterized in that the different types of fruit to be fed to and homogenized with the banana mixture in the form of fruit pulps are tropical or subtropical fruits, viz. Naranjilla (lulu), Solanum quitoense/tamarind, Cyphomandra betacea/guayava (Psidium guayava), papaya/Carica papya, mangoes (Mangifera indica), purple grenadilla/fruit of the passion flower (Passiflora edulis), Chirimoya Guanabana, avocados, or the European fruits suitable for the production of preserves, viz. : pears, plums, strawberries, peaches that are added in amounts of up to 50 % of the total to the pasty banana mix.

3. A process for the production of a foodstuff according to claims 1 or 2, characterized in that coffee is additionally admixed in grain or pulverulent form to the mixtures.

## Revendications

1. Procédé pour réaliser un aliment dont les éléments essentiels sont des fruits secs respectivement des bananes sèches sucrées, caractérisé en ce que

a) l'on distribue les bananes originalement séchées à une teneur en eau s'approchant à peu près à zéro en phase dans l'eau comme dispersant et que l'on transmet dans un mélange d'une tenue liquide ou pâteuse ;

b) l'on ajoute proportionnellement au mélange des fruits différents sous forme de pulpe de fruits, ayant à peu près une consistance respectivement une viscosité identique, de préférence avec du chocolat, et que l'on homogénéise avec celui-ci ;

c) l'on goûte le mélange homogénéisé en mêlant avec solution aqueuse de sucre de canne ou de sucre de betterave et que l'on retransmet ensuite le produit mélangé à la phase pâteuse par séchage pour l'usinage final comme confiture, confiserie ou analogue.

2. Procédé pour réaliser un aliment suivant la revendication 1, caractérisé en ce que les fruits différents à ajouter sous forme de pulpe de fruits au mélange de bananes et à homogénéiser sont des fruits du midi, notamment de la naranjille (lulo, Solanum quitoense/tamaris), Cyphomandra betacea/guayave (Psidium guayava), de la papaye/Carica papya, de la mangue (Mangifera indica), de la grenadille pourpre/fruit de la passiflore (Passiflora edulis), Chirimoya-Guanbana, de l'avocat, ou des fruits européens apte à la production de confiture, notamment des poires, des prunes, des fraises, des pêches que l'on ajoute dans des proportions jusqu'aux 50 % au mélange de bananes pâteux.

3. Procédé pour réaliser un aliment suivant les revendications 1 et 2, caractérisé en ce que l'on ajoute supplémentairement au mélange du café sous forme granulaire ou en poudre.